(19) Europäisches Patentamt / European Patent Office / Office européen des brevets

(11) **EP 3 904 575 B1**

(12) **EUROPEAN PATENT SPECIFICATION**

(45) Date of publication and mention
of the grant of the patent:
**24.07.2024  Bulletin 2024/30**

(21) Application number: **19904809.1**

(22) Date of filing: **22.11.2019**

(51) International Patent Classification (IPC):
*D03D 1/00* ^(2006.01)      *D03D 13/00* ^(2006.01)
*F16C 33/18* ^(2006.01)    *D03D 15/43* ^(2021.01)
*D03D 15/573* ^(2021.01)   *D03D 15/58* ^(2021.01)
*F16C 33/20* ^(2006.01)    *D03D 15/283* ^(2021.01)

(52) Cooperative Patent Classification (CPC):
**F16C 33/201; D03D 1/0041; D03D 13/004;
D03D 15/283; D03D 15/43; D03D 15/573;
D03D 15/58; F16C 33/18;** D10B 2321/042;
D10B 2331/04; D10B 2403/0114; D10B 2505/00;
F16C 2208/32

(86) International application number:
**PCT/JP2019/045820**

(87) International publication number:
**WO 2020/137287 (02.07.2020 Gazette 2020/27)**

(54) **SLIDING FABRIC**

GLEITGEWEBE

TISSU GLISSANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2018  JP 2018242695**

(43) Date of publication of application:
**03.11.2021  Bulletin 2021/44**

(73) Proprietor: **Toray Industries, Inc.**
**Tokyo 103-8666 (JP)**

(72) Inventors:
• **SEKIYAMA, Masato**
  **Otsu-shi, Shiga 520-2141 (JP)**
• **SUYAMA, Hiroshi**
  **Osaka-shi, Osaka 530-8222 (JP)**
• **NINOMIYA, Yuki**
  **Otsu-shi, Shiga 520-2141 (JP)**
• **HARADA, Masaru**
  **Otsu-shi, Shiga 520-2141 (JP)**

(74) Representative: **Mewburn Ellis LLP**
**Aurora Building**
**Counterslip**
**Bristol BS1 6BX (GB)**

(56) References cited:
WO-A1-2018/074207      WO-A1-2018/074207
CN-A- 103 572 454      JP-A- 2005 220 486
JP-A- 2005 220 487     JP-A- 2018 145 545
JP-A- S58 180 837      JP-A- S62 261 716

**Description**

TECHNICAL FIELD

The present invention relates to a sliding fabric having wear resistance.

BACKGROUND ART

Conventionally, fluororesin has been used to laminate or coat a surface layer of a sliding member, due to its advantageous low friction coefficient. The fluororesin used for the lamination or the coating, however, provides a fluororesin film that is thin and is easily peeled off for its non-adhesiveness, and therefore the lamination or the coating has been repetitively required to maintain the sliding property for a long period. In order to solve such a drawback, the fluororesin is formed into fibers and disposed as a woven or knitted fabric or a nonwoven fabric on a surface of a sliding member to improve the wear resistance, and further developed is a more firmly adhesive sliding fabric obtained by combining the fluororesin with a woven or knitted fabric easily adhering to another material.

For example, Patent Document 1 discloses a heat and wear resistant multi-layer woven fabric that is a multi-layer woven fabric including a PTFE fiber-containing sliding woven fabric and a foundation woven fabric and that is made to have an optimal configuration on the foundation surface to have high heat resistance and high wear resistance and be thus capable of exhibiting a long-term sliding property even when exposed to a high-temperature environment.

Further, in order to obtain a sliding fabric having wear resistance even subjected to repetitive frictional force accompanied by shearing force, a sliding fabric including fluororesin fibers and high-strength fibers has been developed.

For example, Patent Document 2 discloses a fluorine fiber-interwoven fabric that is a woven fabric obtained by interweaving fluorine fiber yarns and high-strength fiber yarns having a tensile strength of 2 GPa or more and that is characterized in that the fluorine fibers cover 30% or more of the area on one of the surfaces of the woven fabric. Further, Patent Document 2 indicates that when the woven fabric is formed into a base material for a composite-material bearing, the base material exhibits, due to the configuration described above, the low frictional property of the fluorine fibers and does not allow the fluorine fibers to be peeled off, and thus discloses provision of a composite-material sliding material having excellent durability and mechanical characteristics.

Patent Document 3 discloses a sliding fabric that includes fluororesin fibers and other fibers alternately arranged as the warp and/or the weft on at least one surface of the fabric and that has an amount of compression of 25 um or less. Patent Document 4 discloses a fabric with low friction coefficient and an application thereof. Patent Document 5 discloses a fluorofiber union cloth and a composite material made of the cloth. The fluorofiber union cloth is produced by the combined weaving of a fluorofiber yarn and a high-strength fiber yarn having a tensile strength of ≥2 GPa. The fluorofiber covers ≥30% of either one surface of the cloth.

PRIOR ART DOCUMENTS

PATENT DOCUMENTS

Patent Document 1: JP 6398189; Patent Document 2: JP 2005-220486; Patent Document 3: WO 2018/074207; Patent Document 4: CN 103572454 A; Patent Document 5: JP 2005-220486 A

SUMMARY OF THE INVENTION

PROBLEMS TO BE SOLVED BY THE INVENTION

The heat and wear resistant multi-layer woven fabric described in Patent Document 1, however, has a multi-layer weave structure including a fluorine fiber-containing layer and a layer including fibers other than the fluorine fibers. Therefore, depending on the degree of compressive deformation and wear of the fluorine fiber-containing layer, the woven fabric changes the dimension thereof in the thickness direction and tends to allow a play to be easily generated between members when used as a bearing or a sliding fabric, and there has been therefore room for improvement to allow the woven fabric to exhibit the sliding property for a longer period.

Further, the fluorine fiber-interwoven fabric described in Patent Document 2 represents a technique of forming a twill weave structure or a sateen weave structure with the fluorine fibers used as one of the warp and the weft and the high-strength fibers used as the other, as means for increasing the area of the fluorine fibers on one of the surfaces of the woven fabric. The twill weave structure and the sateen weave structure, however, have had problems of having fewer intersections between the warp and the weft than the plain weave structure, having poor dimensional stability of the woven fabric, and having insufficient wear resistance when subjected to repetitive frictional force accompanied by shearing force. On the other hand, Patent Document 2 also discloses means for employing the plain weave structure. The plain weave structure, however, requires a decrease in the ratio of the high-strength fibers to increase the coverage of the fluorine fibers on the surface, which decreases the strength of the woven fabric. The resultant woven fabric has had a problem of having insufficient wear resistance when subjected to repetitive frictional force accompanied by shearing force.

The single-layer plain-woven fabric specifically disclosed in Patent Document 3 and obtained by alternately arraying, as the warp and the weft, polytetrafluoroethylene fibers having a large fineness and other fibers such as polyphenylene sulfide fibers or carbon fibers having a small fineness is an excellent fabric in terms of having no play, but allows the polytetrafluoroethylene fibers and the other fibers to appear similarly on the front and the back, and therefore there has been room for improvement in the long-term sliding property against the situation of being subjected to repetitive frictional force accompanied by shearing force for a long period.

Accordingly, an object of the present invention is to provide a sliding fabric that has high wear resistance and can exhibit a long-term sliding property even when subjected to repetitive frictional force accompanied by shearing force.

SOLUTIONS TO THE PROBLEMS

In order to achieve the object, the present invention has the following configurations. Disclosed herein is a sliding fabric being a single-layer plain-woven fabric configured to include fluororesin fibers A and at least one type of fibers B having a tensile strength of 10 cN/dtex or more, the sliding fabric having a ratio of 1.5 or more between an area ratio of the fluororesin fibers A on one surface thereof and an area ratio of the fluororesin fibers A on another surface.

In embodiments of the sliding fabric above, fluororesin fibers A1 and fibers B1 below are alternately arranged one by one as one of warp and weft, fibers B2 and fibers C below are alternately arranged one by one as the weft or the warp perpendicular to the fluororesin fibers A1 and the fibers B1, and formulae (i) and (ii) below are satisfied:

the fluororesin fibers A1: the fluororesin fibers A having a total fineness a1;
the fibers B1: the fibers B having a total fineness b1;
the fibers B2: the fibers B having a total fineness b2; and
the fibers C: fluororesin fibers A2 or fibers B3, the fluororesin fibers A2 being the fluororesin fibers A that have a total fineness x2, and the fibers B3 being the fibers B that have a total fineness x2,

$$a1/b1 \geq 1.5 \quad (i);$$

and

$$b2/x2 \geq 1.5 \quad (ii).$$

In some such embodiments, a formula $b2/b1 \geq 1.5$ is satisfied, and/or a formula $a1/x2 \geq 1.5$ is satisfied, and/or the fibers C are the fluororesin fibers A2.

In embodiments of the sliding fabric the fluororesin fibers A are made from polytetrafluoroethylene resin.

In embodiments of the sliding fabric the fibers B are fibers having a tensile strength of 20 to 50 cN/dtex.

In embodiments of the sliding fabric the fibers B are fibers having a tensile modulus of 450 to 800 cN/dtex.

In embodiments of the sliding fabric the fibers B are organic fibers.

In embodiments of the sliding fabric the fibers B are liquid crystal polyester fibers.

Also disclosed herein is a robot arm cable cover including, in at least a part thereof, the sliding fabric according to the invention.

Also disclosed herein is a bearing member including, in at least a part thereof, the sliding fabric according to the invention.

EFFECTS OF THE INVENTION

According to the present invention, provided is a sliding fabric that has high wear resistance and can exhibit a long-term sliding property even when subjected to repetitive frictional force accompanied by shearing force.

BRIEF DESCRIPTION OF THE DRAWINGS

Fig. 1 is plan views of the front surface and the back surface of a fabric, according to one embodiment of the present invention, described in Example 1.
Fig. 2 is plan views of the front surface and the back surface of a fabric described in Comparative Example 2.
Fig. 3 is plan views of the front surface and the back surface of a fabric described in Comparative Example 3.

EMBODIMENTS OF THE INVENTION

A sliding fabric according to the present invention is a single-layer plain-woven fabric configured to include fluororesin fibers A and at least one type of fibers B having a tensile strength of 10 cN/dtex or more, and is characterized in having a ratio of 1.5 or more between an area ratio of the fluororesin fibers A on one surface thereof and an area ratio of the fluororesin fibers A on another surface.

<Design of fabric>

The sliding fabric according to the present invention has a single-layer plain structure. Forming the fabric in the plain structure having the most intersections between the warp and the weft improves the dimensional stability of the fabric. The improvement results in allowing the fabric to exhibit the strength and the stiffness of the fibers constituting the fabric to a maximum extent even when subjected to repetitive frictional force accompanied by shearing force, and thus the fabric having excellent wear resistance can be obtained. Further, forming the fabric in the single-layer plain structure suppresses the dimensional change in the thickness direction caused by compressive deformation or wear, compared to multi-layer structures such as a double-layer structure and a triple-layer structure, and can thus prevent a play or dimensional distortion between members when the fabric is used as a bearing or a sliding fabric.
Further, the single-layer plain structure is preferably a structure including, for both the warp and the weft, two types of fibers that have different finenesses and are alternately arrayed. Forming the fabric in such a structure facilitates controlling the area ratio of the fluororesin fibers A and the area ratio of the fluororesin fibers A on the other surface.
As the forms of alternating array of two types of fibers having different finenesses, for example, when the fibers A and the fibers B are alternately arrayed, there are three-yarn alternation in which three yarns of fibers A and three yarns of fibers B are alternately arrayed, two-yarn alternation in which two yarns of fibers A and two yarns of fibers B are alternately arrayed, and one-yarn alternation in which one yarn of fibers A and one yarn of fibers B are alternately arrayed. Particularly, the form of one-yarn alternating arrangement in which one yarn of fibers A and one yarn of fibers B are alternately arrayed minimizes the region in which the front surface and back surface are symmetric, to enable an increase of the ratio between the area ratios of the fluororesin fibers A on the front surface and the back surface. Accordingly, the alternating array is preferably one-yarn alternation. The one-yarn alternation also allows no excessive localization of the fluororesin fibers A in the fabric, can realize a balanced state between the strength and the low frictional property over the whole fabric, and can thus improve the wear resistance.
The sliding fabric according to the present invention has a ratio of 1.5 or more between the area ratio of the fluororesin fibers A on one surface thereof and the area ratio of the fluororesin fibers A on the other surface. The area ratio of the fluororesin fibers A referred to here means the ratio of an area $\beta$ occupied by the fluororesin fibers A to an imaged area $\alpha$ obtained by imaging a surface of the fabric with a microscope, and the area ratio is obtained by the formula below.

$$\text{Area ratio of fluororesin fibers A} = \beta/\alpha \times 100 \ [\%]$$

The ratio, referred to here, between the area ratio of the fluororesin fibers A on one surface of the fabric and the area ratio of the fluororesin fibers A on the other side is obtained by the formula below, defining as Sa the area ratio of the fluororesin fibers A on a surface (hereinafter, sometimes referred to as a sliding surface) having a larger area ratio of the fluororesin fibers A between the front surface and the back surface of the fabric, and defining as Sb the area ratio of the fluororesin fibers A on the other surface.

$$\text{Ratio between area ratios} = Sa/Sb$$

Here, the fabric having a larger area ratio of the fluororesin fibers A improves the low frictional property on the surface, but decreases the adhesiveness. That is, in the sliding fabric, the surface having a larger area ratio of the fluororesin fibers A is useful as the sliding surface, and the area ratio of the fluororesin fibers A on the sliding surface is preferably larger, but area ratio of the fluororesin fibers A on the other surface is preferably smaller. Accordingly, the base of the present invention is, as a parameter of constituting the sliding fabric, having paid attention to "the ratio between the area ratio of the fluororesin fibers A on one surface of the fabric and the area ratio of the fluororesin fibers A on the other surface" and found that appropriately setting the ratio gives excellent wear resistance.

From such a viewpoint, the fabric should have a ratio of 1.5 or more between the area ratio of the fluororesin fibers A on one surface thereof and the area ratio of the fluororesin fibers A on the other. When having such a ratio, the fabric has good balance between the low frictional property attributed to the fluororesin fibers A on the sliding surface and the strength attributed to the fibers B on the other surface to be capable of obtaining excellent wear resistance. The fabric further preferably has a ratio of 2.0 or more, especially preferably 4.0 or more. The fabric having a ratio in the range of 1.0 or more and less than 1.5 between the area ratio of the fluororesin fibers A on one surface thereof and the area ratio of the fluororesin fibers A on the other surface loses the balance between the low frictional property and the strength and cannot obtain wear resistance when subjected to repetitive frictional force accompanied by shearing force. The fabric has, as a substantial upper limit, a ratio of 100 between the area ratio of the fluororesin fibers A on one surface thereof and the area ratio of the fluororesin fibers A on the other surface.

In the sliding fabric according to the present invention, the means for adjusting the ratio between the area ratio of the fluororesin fibers A on one surface and the area ratio of the fluororesin fibers A on the other surface is not especially limited except achieving the area ratio and forming the structure of a single-layer plain-woven fabric, but the adjustment can be realized by forming a sliding fabric in which following fluororesin fibers A1 and fibers B1 having a total fineness b1 are alternately arranged one by one as one of warp and weft, fibers B2 and fibers C below are alternately arranged one by one as the weft or the warp perpendicular to the fluororesin fibers A1 and the fibers B1, and formulae (i) and (ii) below are satisfied:

the fluororesin fibers A1: the fluororesin fibers A having a total fineness a1;
the fibers B1: the fibers B having a total fineness b1;
the fibers B2: the fibers B having a total fineness b2; and
the fibers C: fluororesin fibers A2 or fibers B3, the fluororesin fibers A2 being the fluororesin fibers A that have a total fineness x2, and the fibers B3 being the fibers B that have a total fineness x2,

$$a1/b1 \geq 1.5 \ (i);$$

and

$$b2/x2 \geq 1.5 \ (ii).$$

When the fluororesin fibers A2 are used as the fibers C, the fibers having a larger total fineness between the fluororesin fibers A1 and A2 are defined as A1. When the fibers B3 are used as the fibers C, the warp or the weft for which the fibers C are arranged includes two types of fibers B, i.e. the fibers B2 and the fibers B3, which are handled defining the fibers having a smaller total fineness as the fibers B3 having the total fineness x2 and defining the fibers having a larger total fineness as the fibers B2 having the total fineness b2.

As the fibers perpendicular to the fluororesin fibers A have a large fineness, the overlap area of these two types of fibers perpendicular to each other is increased, and as the fibers perpendicular to the fluororesin fibers A have a smaller fineness, the overlap area is decreased. Accordingly, arranging two types of fibers having different finenesses alternately one by one as the weft or the warp perpendicular to the fluororesin fibers A enables the adjustment of the ratio of the fluororesin fibers A between the front surface and the back surface. The fineness ratio a1/b1 is preferably 1.5 or more, further preferably in the range of 1.5 to 30.0. The fibers having a fineness ratio particularly in the range of 5.0 to 15.0 enables adjusting the ratio of the fluororesin fibers A between the front surface and the back surface in an appropriate range, suppresses roughness on the fabric, and has excellent weaving performance, and therefore such a fineness ratio can be listed as an especially preferable condition.

Further, the fineness ratio b2/x2 is preferably 1.5 or more, further preferably in the range of 1.5 to 30.0. The fibers having a fineness ratio particularly in the range of 5.0 to 15.0 enables adjusting the ratio of the fluororesin fibers A between the front surface and the back surface in an appropriate range, suppresses roughness on the fabric, and has excellent weaving performance, and therefore such a fineness ratio can be listed as an especially preferable condition.

The fluororesin fibers A2 used as the fibers C furthermore increase the ratio between the area ratios of the fluororesin fibers A on the front surface and the back surface, and therefore such selection can be listed as an especially preferable condition.

<Fluororesin fiber A>

In the present invention, the fluororesin that is a component of the fluororesin fibers should be configured to include a monomer unit containing one or more fluorine atoms in a main chain or a side chain. Particularly, the fluororesin configured to include a monomer unit having many fluorine atoms is preferable.

The fluororesin includes preferably 70 mol% or more, more preferably 90 mol% or more, further preferably 95 mol% or more of the monomer unit containing one or more fluorine atoms in a repeating structural unit of the polymer.

Examples of the monomer containing one or more fluorine atoms include fluorine atom-containing vinyl-based monomers such as tetrafluoroethylene, hexafluoropropylene, and chlorotrifluoroethylene, and particularly, use of at least tetrafluoroethylene is preferable.

As the fluororesin, there can be used singly or in a blend of two or more of, for example, polytetrafluoroethylene (PTFE), a tetrafluoroethylene-hexafluoropropylene copolymer (FEP), a tetrafluoroethylene-p-fluoroalkyl vinyl ether copolymer (PFA), polychlorotrifluoroethylene (PCTFE), and an ethylene-tetrafluoroethylene copolymer (ETFE).

The fluororesin including a tetrafluoroethylene unit preferably has a larger content of the tetrafluoroethylene unit in terms of sliding characteristics and is preferably a copolymer containing, of the total, 90 mol% or more, preferably 95 mol% or more of tetrafluoroethylene, and use of polytetrafluoroethylene fibers as a homopolymer of tetrafluoroethylene is most preferable.

As the form of the fluororesin fibers used in the present invention, both a monofilament formed of one filament and a multifilament formed of a plurality of filaments can be used, but a multifilament is preferable from the viewpoint of the weaving performance and the roughness on the surface of the fabric into which the fibers are formed.

The fluororesin fibers used in the present invention preferably have a total fineness in the range of 50 to 6000 dtex. When two types of fluororesin fibers having different total finenesses are used, the fluororesin fibers having a larger total fineness have a total fineness preferably in the range of 1000 to 6000 dtex, further preferably in the range of 3000 to 5500 dtex. The fluororesin fibers having a smaller total fineness have a total fineness preferably in the range of 50 to 1000 dtex, further preferably in the range of 400 to 900 dtex. When having a total fineness of 50 dtex or more, the fibers constituting the fabric are strong, and can suppress fiber fracture at the time of wear and also reduce yarn breakage during weaving to improve the process passability. The fibers having a total fineness of 6000 dtex or less enables the fabric to reduce the amount of compression in the thickness direction at the time of application of load, thus suppress the play between members, and improve the long-term durability.

In the above, when two types of fluororesin fibers A having different total finenesses are used, a fineness ratio a1/x2 between the total fineness a1 of the fluororesin fibers having a larger total fineness and the total fineness x2 of the fluororesin fibers having a smaller total fineness is preferably 1.5 or more, further preferably in the range of 1.5 to 30.0. Particularly, the fineness ratio is especially preferably in the range of 5.0 to 15.0.

<Fiber B>

In the present invention, the fibers B are to be at least one type of fibers having a tensile strength of 10 cN/dtex or more, and have a tensile strength of preferably 10 to 50 cN/dtex, further 20 to 50 cN/dtex. The fibers B having such a tensile strength enables the woven fabric to furthermore suppress fracture even when subjected to repetitive frictional force accompanied by shearing force and helps the woven fabric to form a self lubricant film by wear of the fluororesin fibers on the surface thereof, and therefore such a tensile strength can be listed as more preferable condition.

The fibers B constituting the present invention preferably have a tensile modulus in the range of 20 to 800 cN/dtex. Further, the fibers B having a tensile modulus in the range of 450 to 800 cN/dtex enables the fabric to maintain the structure thereof even when subjected to repetitive frictional force accompanied by shearing force and thus to obtain especially excellent wear resistance. The fibers B having a tensile modulus of 20 cN/dtex or more improve the dimensional stability of the fabric and give the fabric having excellent wear resistance. The fibers B having a tensile modulus of 800 cN/dtex or less are preferable because they are not excessively high in stiffness and never impair the weaving performance even when interwoven with the fluororesin fibers having a low stiffness.

The fibers B constituting the present invention have an elongation of preferably 1 to 15%, further preferably in the range of 1 to 5%. The fibers B having an elongation of particularly 1 to 3% can reduce the dimensional change of the fabric subjected to frictional force, and therefore such an elongation can be listed as an especially preferable condition. The fibers B having an elongation of 1% or more can reduce yarn breakage during weaving to improve the process passability. The fibers B having an elongation in the range of 1 to 15% allow the fabric to improve the dimensional stability and to be applicable to a part requiring dimensional accuracy as a sliding fabric.

The type of the fibers B constituting the present invention is not especially limited within the range satisfying the conditions described above. There can be used, for example, organic fibers such as poly-p-phenylene terephthalamide, poly-m-phenylene isophthalamide, poly-p-phenylene benzobisoxazole (PBO), ultra high molecular weight polyethylene (UHMWPE), and liquid crystal polyester; and inorganic fibers such as glass, carbon, and silicon carbide, and one type or two or more types of fibers can be used. Especially, use of organic fibers as the fibers B can improve the durability against shearing force when the fibers are formed into the sliding fabric, and therefore this use can be listed as a more preferable condition. Particularly, use of liquid crystal polyester fibers having a high strength and a high modulus is especially preferable.

The form of the fibers B constituting the present invention is not especially limited, and either of a filament (long fiber) and a spun yarn may be employed, but the fibers B are preferably filaments from the viewpoint of tensile strength and tensile stiffness. Further, both a monofilament formed of one filament and a multifilament formed of a plurality of filaments can be used, but the fibers B are preferably multifilaments from the viewpoint of the weaving property and the roughness on the surface of the fabric into which the fibers are formed.

The fibers B of the present invention preferably have a total fineness in the range of 200 to 4000 dtex. When two types of fibers B having different total finenesses are used, the fibers B having a larger total fineness have a total fineness preferably in the range of 500 to 4000 dtex, further preferably in the range of 800 to 2000 dtex. The fibers B having a smaller total fineness have a total fineness preferably in the range of 200 to 1000 dtex, further preferably in the range of 400 to 900 dtex. When having a total fineness of 200 dtex or more, the fibers constituting the fabric are strong, and can suppress fiber fracture at the time of wear and also reduce yarn breakage during weaving to improve the process passability. The fibers having a total fineness of 4000 dtex or less enables the fabric to have small roughness on the surface thereof and to reduce the influence on the low frictional property.

In the above, a fineness ratio b2/b1 between the total fineness b1 of the fibers B alternately arrayed with the fluororesin fibers A (the total fineness b1 of the fibers B alternately arrayed with the fluororesin fibers A having a larger fineness when the fluororesin fibers A are arranged for both the warp and the weft) and the total fineness b2 of the fibers B perpendicular to the fibers B having the total fineness b1 is preferably 1.5 or more, further preferably in the range of 1.5 to 30.0. Particularly, the fineness ratio is especially preferably in the range of 5.0 to 15.0.

In order to further increase the wear resistance of the sliding fabric configured as above, it is possible to use the sliding fabric that has been impregnated with resin. Here, as the resin used for resin impregnation, thermosetting resin or thermoplastic resin can be used. The resin is not especially limited, and as the thermosetting resin, there can be preferably used, for example, phenolic resin, melamine resin, urea resin, unsaturated polyester resin, epoxy resin, polyurethane resin, diallyl phthalate resin, silicon resin, polyimide resin, vinyl ester resin, and modified resin thereof, and as the thermoplastic resin, there can be preferably used, for example, vinyl chloride resin, polystyrene, ABS resin, polyethylene, polypropylene, fluororesin, polyamide resin, polyacetal resin, polycarbonate resin, polyester, and a polyamide, and further there can be preferably used, for example, synthetic rubber or elastomer such as thermoplastic polyurethane, butadiene rubber, nitrile rubber, neoprene, and polyester. Particularly, there can be preferably used resin containing phenolic resin and polyvinyl butyral resin as main components, unsaturated polyester resin, vinyl ester resin, polyolefin-based resin such as polyethylene and polypropylene, and polyester resin, in terms of the impact resistance, the dimensional stability, the strength, the costs, and the like. These types of thermosetting resin and thermoplastic resin may contain various additive agents that are usually used for the industrial purpose or application, the productivity in the manufacturing process or processing, or the improvement of the characteristics. The resin can contain, for example, a modifier, a plasticizer, a filler, a mold lubricant, a colorant, a diluent, or the like. The main component referred to here refers to a component having the largest weight ratio among components except a solvent, and the resin containing phenolic resin and polyvinyl butyral resin as the main components means that these two types of resin have the first largest and second largest (no particular order) weight ratios.

As the method for impregnating the sliding fabric with resin, when thermosetting resin is used, a method is generally used in which the thermosetting resin is dissolved in a solvent to be adjusted into varnish and the varnish is impregnated into a fabric for coating by knife coating, roll coating, comma coating, gravure coating, or the like. Alternatively, when thermoplastic resin is used, melt extrusion lamination or the like is generally used.

A lubricant or the like can also be added to the sliding fabric according to the present invention as necessary. The type of the lubricant is not especially limited, but is preferably a silicon-based lubricant or a fluorine-based lubricant material.

The sliding fabric, according to the present invention, obtained as described above has a single-layer plain structure having many intersections between the warp and the weft, and can therefore suppress distortion of the fabric caused by external force and stress concentration generated along with the distortion and exhibit maximum strength and stiffness of the fibers constituting the fabric. Thus, the fabric having excellent wear resistance can be obtained. In addition, optimizing the configurations of the fluororesin fibers A and the fibers B can give the sliding fabric that can attain both the low frictional property on the sliding surface and the strength and exhibit high sliding durability even when subjected to repetitive frictional force accompanied by shearing force. Therefore, the sliding fabric according to the present invention can exhibit high sliding durability in applications in which fabrics have conventionally had difficulty being used for a long period due to being subjected to repetitive frictional force accompanied by shearing force, and can thus be used for industrially highly practical applications. Particularly, the sliding fabric is preferably used in applications such as a robot arm cable cover and a bearing member. A robot arm cable cover including, in at least a part thereof, the sliding fabric according to the present invention, has the low frictional property and the strength of the fabric to never allow early fracture even when rubbed with a part of an apparatus and to be thus capable of improving the product life. A bearing member including, in at least a part thereof, the sliding fabric according to the present invention can attain both low torque of the bearing and high adhesiveness with the base material due to optimization of the ratio of the fluororesin fibers between the front surface and the back surface, and can also form a sliding part with less play and high dimensional accuracy due to the sliding fabric being a high dimensionally stable single-layer plain-woven fabric.

EXAMPLES

Hereinafter, the present invention is described with reference to examples and comparative examples.
The methods for measuring various characteristics that are used in the present examples are as follows.

(1) Fineness

The fineness of the fibers was measured in conformity with JIS L1013: 2010 (Testing methods for man-made filament yarns) .

(2) Fineness ratio

As to two types of fibers to be compared, the fineness of the fiber having a larger fineness is defined as $T_L$ [dtex], the fineness of the fiber having a smaller fineness is defined as $T_s$ [dtex], and the fineness ratio was calculated from the formula below.

$$\text{Fineness ratio} = T_L/T_s$$

(3) Tensile strength of fiber

The breaking strength was measured in conformity with JIS L1013: 2010 (Testing methods for man-made filament yarns) .

(4) Tensile modulus of fiber

The tensile modulus of the fibers was measured in conformity with JIS L1013: 2010 (Testing methods for man-made filament yarns).

(5) Elongation of fiber

The elongation of the fibers was measured in conformity with JIS L1013: 2010 (Testing methods for man-made filament yarns).

(6) Weave density

In conformity with JIS 1096: 2010 (Testing methods for woven and knitted fabrics), a sample was placed on a flat table with unnatural creases and tension removed, the number of warp yarns and weft yarns was counted in a 50-mm space at different locations, and the average values of the warp yarns and the weft yarns were calculated per unit length.

(7) Cover factor of fabric

In view of the difference in specific gravity of materials, the cover factor (CF) of the fabrics was calculated by the formula below. Assuming that two or more types of fibers are used for each of the warp and the weft, the fibers used for the warp are numbered as a warp yarn 1, a warp yarn 2,..., and the fibers used for the weft are numbered as a weft yarn 1, a weft yarn 2,....

CF = (fineness (dtex) of warp yarn 1/specific gravity of warp yarn 1)$^{1/2}$ × density of warp yarn 1 (number of yarns/in (2.54 cm)) + (fineness (dtex) of warp yarn 2/specific gravity of warp yarn 2)$^{1/2}$ × density of warp yarn 2 (number of yarns/in (2.54 cm)) +... + (fineness (dtex) of weft yarn 1/specific gravity of weft yarn 1)$^{1/2}$ × density of weft yarn 1 (number of yarns/in (2.54 cm)) + (fineness (dtex) of weft yarn 2/specific gravity of weft yarn 2)$^{1/2}$ × density of weft yarn 2 (number of yarns/in (2.54 cm)) +...

(8) Thickness of fabric

The thickness of the fabrics was measured in conformity with JIS L1013: 2010 (Testing methods for woven and knitted fabrics).

(9)

$$Area\ ratio\ of\ fluororesin\ fibers\ A\ =\ \beta/\alpha\ \times\ 100\ [\%]$$

The surface of the fabrics was imaged at a magnification of 50 times with microscope VHX-2000 manufactured by KEYENCE CORPORATION, and the area ratio of the fluororesin fibers A was calculated from the calculation formula below, with the imaged area defined as $\alpha$ and the area occupied by the fluororesin fibers A in the imaged area as $\beta$.

$$Area\ ratio\ of\ fluororesin\ fibers\ A\ =\ \beta/\alpha\ \times\ 100\ [\%]$$

The image area $\alpha$ and the area $\beta$ occupied by the fluororesin fibers A were calculated using image analyzing software WinR00F2013 manufactured by MITANI CORPORATION.

(10) Ratio between area ratio of fluororesin fibers A on one surface of fabric and area ratio of fluororesin fibers A on other surface

The ratio was obtained by the formula below, with the area ratio of the fluororesin fibers A on a surface having a larger area ratio of the fluororesin fibers A between the front surface and the back surface of the fabric defined as Sa, and the area ratio of the fluororesin fibers A on the other surface defined as Sb.

Ratio between area ratios of fluororesin fibers A = Sa/Sb

(11) Kinetic friction coefficient

The kinetic friction coefficient was measured by the ring wear test indicated below.

In conformity with Method A of JIS K7218: 1986 (Testing methods for sliding wear resistance of plastics), the woven fabrics were sampled with a length of 30 mm and a width of 30 mm, placed on the same size 2-mm thick POM resin plate, and fixed to a sample holder.

Used as the mating material was a hollow cylinder-shaped material that was made from S45C and had an outer diameter of 25.6 mm, an inner diameter of 20 mm, and a length of 15 mm, the mating material having the surface thereof polished with sand paper and having a surface roughness in the range of 0.8 pmm ± 0.1 RA measured by a roughness tester (SJ-201 manufactured by Mitsutoyo Corporation).

As the ring wear tester, MODEL: EFM-III-EN manufactured by ORIENTEC CORPORATION was used, and a test was performed at a friction load of 2 MPa and a friction speed of 200 mm/second to measure the sliding torque, and when the measured sliding torque was stabilized after the start of the measurement, the kinetic friction coefficient at the stable part was calculated.

(12) Wear resistance

After the ring wear test was performed up to a sliding distance of 5000 m, the surface of the tested fabrics was observed. The fabric hardly having fracture or fiber fracture was rated as ⊙, the fabric having no fracture but having partial fiber fracture was rated as O, the fabric having partial fracture at the rubbed part was rated as △, and the fabric having complete fracture at the rubbed part was rated as ×.

(13) Play

The obtained fabrics were used as a sliding material of a bearing for a period of 3 months and the degree of play between members was checked, and the fabric hardly giving a play was rated as ⊙, the fabric giving a slight play was rated as O, the fabric giving a remarkable play but having caused no breakage was rated as △, and the fabric having caused breakage was rated as ×.

Example 1

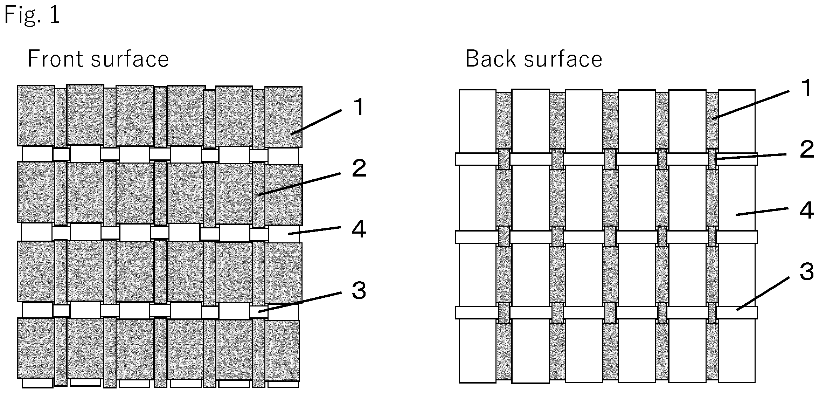

A single-layer plain-woven fabric was produced by a loom, with PTFE fibers and liquid crystal polyester fibers used as the warp and alternately arranged at 1 (yarn) : 1 (yarn), the PTFE fibers having a total fineness of 440 dtex and including 60 filaments, and the liquid crystal polyester fibers having a total fineness of 850 dtex, including 144 filaments, and having a tensile strength of 24 cN/dtex, a tensile modulus of 690 cN/dtex, and an elongation of 2.8%, and with PTFE fibers and liquid crystal polyester fibers used as the weft and alternately arranged at 1 (yarn) : 1 (yarn), the PTFE fibers having a total fineness of 5320 dtex and including 240 filaments, and the liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C. Fig. 1 is plan views of the front surface and the back surface of the fabric obtained above, and illustrates the fabric on the front surface corresponding to the sliding surface of which the "fluororesin fibers A1 used as the weft" 1 having a larger total fineness and the "fluororesin fibers A2 used as the warp" 2 having a smaller total fineness are more exposed, and on the back surface of which the "fibers B1 used as the weft" 3 having a smaller total fineness and the "fibers B2 used as the warp" 4 having a larger total fineness are more exposed.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Example 2

A single-layer plain-woven fabric was produced by a loom, with PTFE fibers and poly-p-phenylene terephthalamide fibers used as the warp and alternately arranged at 1 (yarn) : 1 (yarn), the PTFE fibers having a total fineness of 440 dtex and including 60 filaments, and the poly-p-phenylene terephthalamide fibers having a total fineness of 850 dtex, including 144 filaments, and having a tensile strength of 20 cN/dtex, a tensile modulus of 490 cN/dtex, and an elongation of 3.6%, and with PTFE fibers and poly-p-phenylene terephthalamide fibers used as the weft and alternately arranged at 1 (yarn) : 1 (yarn), the PTFE fibers having a total fineness of 5320 dtex and including 240 filaments, and the poly-p-phenylene terephthalamide fibers having a total fineness of 425 dtex, including 72 filaments, and having a tensile strength of 20 cN/dtex, a tensile modulus of 490 cN/dtex, and an elongation of 3.6%. Thereafter, the fabric was refined in a refining tank at 80°C and set at 200°C.

Table 1 summarizes the weave density, the thickness, the area ratios of the fluororesin fibers A on the front surface and the back surface and the ratio between the area ratios the kinetic friction coefficient, the wear resistance, and the result of evaluating the play of this woven fabric.

Comparative Example 1

A single-layer plain-woven fabric was produced by a loom, with PTFE fibers and polyester fibers used as the warp and alternately arranged at 1 (yarn) : 1 (yarn), the PTFE fibers having a total fineness of 440 dtex and including 60 filaments, and the polyester fibers having a total fineness of 850 dtex, including 144 filaments, and having a tensile strength of 8.0 cN/dtex, a tensile modulus of 115 cN/dtex, and an elongation of 13.0%, and with PTFE fibers and polyester fibers used as the weft and alternately arranged at 1 (yarn) : 1 (yarn), the PTFE fibers having a total fineness of 5320 dtex and including 240 filaments, and the polyester fibers having a total fineness of 425 dtex, including 72 filaments, and having a tensile strength of 8.0 cN/dtex, a tensile modulus of 115 cN/dtex, and an elongation of 13.0%. Thereafter, the fabric was refined in a refining tank at 80°C and set at 200°C.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Example 3

A single-layer plain-woven fabric was produced by a loom, with PTFE fibers and liquid crystal polyester fibers used as the warp and alternately arranged at 1 (yarn) : 1 (yarn), the PTFE fibers having a total fineness of 440 dtex and including 60 filaments, and the liquid crystal polyester fibers having a total fineness of 850 dtex, including 144 filaments, and having a tensile strength of 24 cN/dtex, a tensile modulus of 690 cN/dtex, and an elongation of 2.8%, and with PTFE fibers and liquid crystal polyester fibers used as the weft and alternately arranged at 1 (yarn) : 1 (yarn), the PTFE fibers having a total fineness of 2660 dtex and including 120 filaments, and the liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Example 4

A single-layer plain-woven fabric was produced by a loom, with PTFE fibers and liquid crystal polyester fibers used as the warp and alternately arranged at 1 (yarn) : 1 (yarn), the PTFE fibers having a total fineness of 440 dtex and including 60 filaments, and the liquid crystal polyester fibers having a total fineness of 425 dtex, including 72 filaments, and having a tensile strength of 24 cN/dtex, a tensile modulus of 690 cN/dtex, and an elongation of 2.8%, and with PTFE fibers and liquid crystal polyester fibers used as the weft and alternately arranged at 1 (yarn) : 1 (yarn), the PTFE fibers having a total fineness of 1330 dtex and including 60 filaments, and the liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Example 5

A single-layer plain-woven fabric was produced by a loom, with PTFE fibers and liquid crystal polyester fibers used as the warp and alternately arranged at 1 (yarn) : 1 (yarn), the PTFE fibers having a total fineness of 440 dtex and including 60 filaments, and the liquid crystal polyester fibers having a total fineness of 425 dtex, including 72 filaments, and having a tensile strength of 24 cN/dtex, a tensile modulus of 690 cN/dtex, and an elongation of 2.8%, and with PTFE fibers and liquid crystal polyester fibers used as the weft and alternately arranged at 1 (yarn) : 1 (yarn), the PTFE fibers having a total fineness of 880 dtex and including 60 filaments, and the liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 2

A single-layer plain-woven fabric was produced by a loom, with PTFE fibers and liquid crystal polyester fibers used as the warp and the weft and alternately arranged at 1 (yarn) : 1 (yarn), the PTFE fibers having a total fineness of 440 dtex and including 60 filaments, and the liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C.

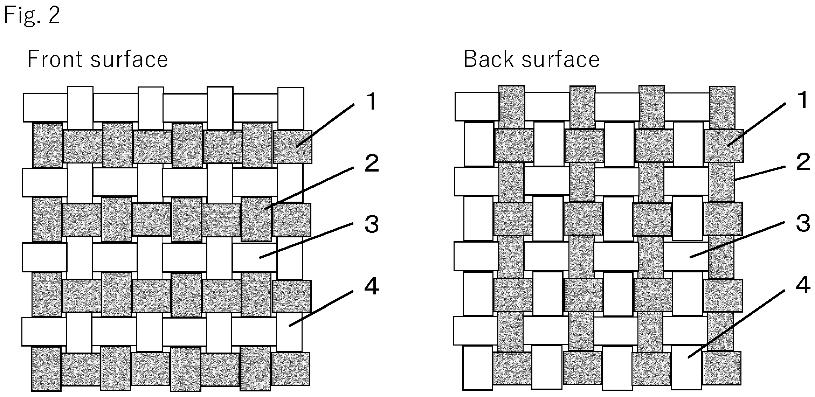

Fig. 2 is plan views of the front surface and the back surface of the fabric obtained above, and illustrates the fabric on the front surface and the back surface of which the total exposing area of the "fluororesin fibers A1 used as the weft" 1 and the "fluororesin fibers A2 used as the warp" 2 was the same as the total exposing area of the "fibers B1 used as the weft" 3 and the "fibers B2 used as the warp" 4.

Table 1 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 3

A single-layer plain-woven fabric was produced by a loom, with liquid crystal polyester fibers used as the warp, the liquid crystal polyester fibers having a total fineness of 425 dtex, including 72 filaments, and having a tensile strength of 24 cN/dtex, a tensile modulus of 690 cN/dtex, and an elongation of 2.8%, and with PTFE fibers used as the weft, the PTFE fibers having a total fineness of 440 dtex and including 60 filaments. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

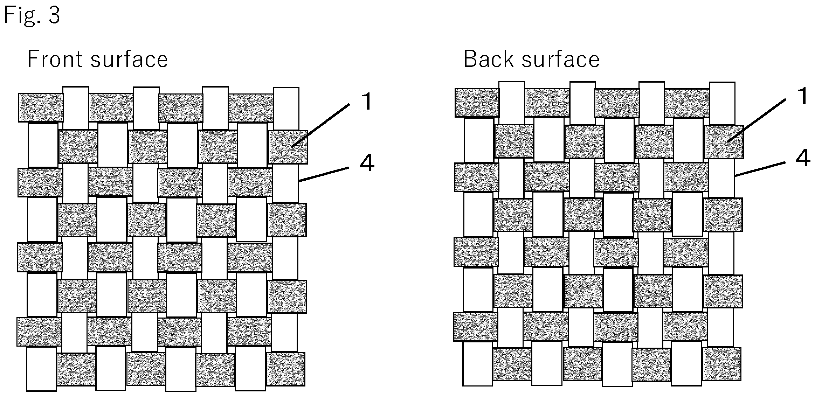

Fig. 3 is plan views of the front surface and the back surface of the fabric obtained above, and illustrates the fabric on the front surface and the back surface of which the total exposing area of the "fluororesin fibers A1 used as the weft" 1 and the "fluororesin fibers A2 used as the warp" was the same as the total exposing area of the "fibers B1 used as the weft" 3 and the "fibers B2 used as the warp" 4.

Comparative Example 4

A single-layer plain-woven fabric was produced by a loom, with liquid crystal polyester fibers used as the warp, the liquid crystal polyester fibers having a total fineness of 425 dtex, including 72 filaments, and having a tensile strength of 24 cN/dtex, a tensile modulus of 690 cN/dtex, and an elongation of 2.8%, and with PTFE fibers used as the weft, the PTFE fibers having a total fineness of 5320 dtex and including 240 filaments. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 5

A single-layer 1/3 twill-woven fabric was produced by a loom, with liquid crystal polyester fibers used as the warp, the liquid crystal polyester fibers having a total fineness of 425 dtex, including 72 filaments, and having a tensile strength of 24 cN/dtex, a tensile modulus of 690 cN/dtex, and an elongation of 2.8%, and with PTFE fibers used as the weft, the PTFE fibers having a total fineness of 440 dtex and including 60 filaments. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 6

A double-layer woven fabric was produced by a loom, the double-layer woven fabric including on the front surface thereof a plain-woven fabric including, as the warp and the weft, PTFE fibers having a total fineness of 440 dtex and including 60 filaments, and on the back surface thereof a plain-woven fabric including, as the warp and the weft, liquid crystal polyester fibers having a total fineness of 425 dtex, including 72 filaments, and having a tensile strength of 24 cN/dtex, a tensile modulus of 690 cN/dtex, and an elongation of 2.8%. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 7

A single-layer plain-woven fabric was produced by a loom, with PTFE fibers and PPS fibers used as the warp and the weft and alternately arranged at 1 (yarn) : 1 (yarn), the PTFE fibers having a total fineness of 440 dtex and including 60 filaments, and the PPS fibers having a total fineness of 220 dtex, including 36 filaments, and having a tensile strength of 5 cN/dtex, a tensile modulus of 40 cN/dtex, and an elongation of 30%. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

Comparative Example 8

A single-layer plain-woven fabric was produced by a loom, with PTFE fibers and carbon fibers used as the warp and the weft and alternately arranged at 4 (yarns) : 4 (yarns), the PTFE fibers having a total fineness of 440 dtex and including 60 filaments, and the carbon fibers having a total fineness of 40 dtex, including 750 filaments, and having a tensile strength of 20 cN/dtex, a tensile modulus of 1300 cN/dtex, and an elongation of 1%. Thereafter, the fabric was refined in a refining tank at 80°C and set at 200°C.

Table 2 summarizes the weave density, the thickness, the area ratios of the fluororesin fibers A on the front surface and the back surface and the ratio between the area ratios, the kinetic friction coefficient, the wear resistance, and the result of evaluating the play of this woven fabric.

[Table 1]

Table 1

| | | | Example 1 | Example 2 | Comparative Example 1 | Example 3 | Example 4 | Example 5 | Comparative Example 2 |
|---|---|---|---|---|---|---|---|---|---|
| Warp | Fluororesin fiber A | | PTFE 440T-60F | PTFE 440T-60F | PTFE 440T-60F | PTFE 440T-60F | PTFE 440T-60F | PTFE 440T-60F | PTFE 440T-60F |
| | Fineness | dtex | 440 | 440 | 440 | 440 | 440 | 440 | 440 |
| | Specific gravity | g/cm$^3$ | 2.3 | 2.3 | 2.3 | 2.3 | 2.3 | 2.3 | 2.3 |
| | Fiber B | | Liquid crystal polyester 850T-144F | Poly-p-phenylene terephthalamide | Polyester 850T-144F | Liquid crystal polyester 850T-144F | Liquid crystal polyester 425T-72F | Liquid crystal polyester 425T-72F | Liquid crystal polyester 425T-72F |
| | Fineness | dtex | 850 | 850 | 850 | 850 | 425 | 425 | 425 |
| | Specific gravity | g/cm$^3$ | 1.4 | 1.4 | 1.4 | 1.4 | 1.4 | 1.4 | 1.4 |
| | Tensile strength | cN/dtex | 24 | 20 | 8 | 24 | 24 | 24 | 24 |
| | Tensile modulus | cN/dtex | 690 | 490 | 115 | 690 | 690 | 690 | 690 |
| | Elongation | % | 2.8 | 3.6 | 13 | 2.8 | 2.8 | 2.8 | 2.8 |
| | Alternating arrangement | – | One-yarn alternation | One-yarn alternation | One-yarn alternation | One-yarn alternation | One-yarn alternation | One-yarn alternation | One-yarn alternation |
| Weft | Fluororesin fiber A | | PTFE 5320T-240F | PTFE 5320T-240F | PTFE 5320T-240F | PTFE 2660T-120F | PTFE 1330T-60F | PTFE 880T-60F | PTFE 440T-60F |
| | Fineness | dtex | 5320 | 5320 | 5320 | 2660 | 1330 | 880 | 440 |
| | Specific gravity | g/cm$^3$ | 2.3 | 2.3 | 2.3 | 2.3 | 2.3 | 2.3 | 2.3 |
| | Fiber B | | Liquid crystal polyester 425T-72F | Poly-p-phenylene terephthalamide | Polyester 425T-72F | Liquid crystal polyester 425T-72F | Liquid crystal polyester 425T-72F | Liquid crystal polyester 425T-72F | Liquid crystal polyester 425T-72F |
| | Fineness | dtex | 425 | 425 | 425 | 425 | 425 | 425 | 425 |
| | Specific gravity | g/cm$^3$ | 1.4 | 1.4 | 1.4 | 1.4 | 1.4 | 1.4 | 1.4 |
| | Tensile strength | cN/dtex | 24 | 20 | 8 | 24 | 24 | 24 | 24 |
| | Tensile modulus | cN/dtex | 690 | 490 | 115 | 690 | 690 | 690 | 690 |
| | Elongation | % | 2.8 | 3.6 | 13 | 2.8 | 2.8 | 2.8 | 2.8 |
| | Alternating arrangement | – | One-yarn alternation | One-yarn alternation | One-yarn alternation | One-yarn alternation | One-yarn alternation | One-yarn alternation | One-yarn alternation |
| Design of fabric | Weave structure | – | Single-layer plain weave | Single-layer plain weave | Single-layer plain weave | Single-layer plain weave | Single-layer plain weave | Single-layer plain weave | Single-layer plain weave |
| | Weave density — Warp | Number of yarns/2.54 cm | 40 | 40 | 40 | 40 | 58 | 58 | 58 |
| | Weave density — Weft | Number of yarns/2.54 cm | 32 | 32 | 32 | 41 | 44 | 49 | 58 |
| | Cover factor (CF) | – | 1818 | 1818 | 1818 | 1824 | 1819 | 1812 | 1813 |
| | Thickness | mm | 0.58 | 0.58 | 0.58 | 0.50 | 0.42 | 0.40 | 0.36 |
| | Fineness ratio — a1/b1 | – | 12.5 | 12.5 | 12.5 | 6.3 | 3.1 | 2.1 | 1.0 |
| | Fineness ratio — b2/x2 | – | 1.9 | 1.9 | 1.9 | 1.9 | 1.0 | 1.0 | 1.0 |
| | Fineness ratio — b2/b1 | – | 2.0 | 2.0 | 2.0 | 2.0 | 1.0 | 1.0 | 1.0 |
| | Fineness ratio — a1/x2 | – | 12.1 | 12.1 | 12.1 | 6.0 | 3.0 | 2.0 | 1.0 |
| | Area ratio of fluororesin fibers A — Front surface | % | 80 | 80 | 80 | 70 | 65 | 60 | 50 |
| | Area ratio of fluororesin fibers A — Back surface | % | 20 | 20 | 20 | 30 | 35 | 40 | 50 |
| | Ratio between area ratios | – | 4 | 4 | 4 | 2.3 | 1.9 | 1.5 | 1.0 |
| Evaluation | Kinetic friction coefficient | – | 0.15 | 0.15 | 0.15 | 0.17 | 0.18 | 0.18 | 0.22 |
| | Wear resistance | – | ⊚ | ○ | △ | ○ | ○ | ○ | △ |
| | Play | – | ⊚ | ⊚ | ⊚ | ⊚ | ⊚ | ⊚ | ○ |

[Table 2]

Table 2

| | | | | Comparative Example 3 | Comparative Example 4 | Comparative Example 5 | Comparative Example 6 | Comparative Example 7 | Comparative Example 8 |
|---|---|---|---|---|---|---|---|---|---|
| Warp | Fluororesin fiber A | | | – | – | – | PTFE 440T-60F | PTFE 440T-60F | PTFE 440T-60F |
| | Fineness | | dtex | – | – | – | 440 | 440 | 440 |
| | Specific gravity | | g/cm³ | – | – | – | 2.3 | 2.3 | 2.3 |
| | Fiber B | | | Liquid crystal polyester 425T-72F | Liquid crystal polyester 425T-72F | Liquid crystal polyester 425T-72F | Liquid crystal polyester 425T-72F | PPS 220T-50F | Carbon fiber 40T-750F |
| | Fineness | | dtex | 425 | 425 | 425 | 425 | 220 | 40 |
| | Specific gravity | | g/cm³ | 1.4 | 1.4 | 1.4 | 1.4 | 1.3 | 1.8 |
| | Tensile strength | | cN/dtex | 24 | 24 | 24 | 24 | 5 | 20 |
| | Tensile modulus | | cN/dtex | 690 | 690 | 690 | 690 | 40 | 1300 |
| | Elongation | | % | 2.8 | 2.8 | 2.8 | 2.8 | 30 | 1 |
| | Alternating arrangement | | – | – | No alternating arrangement | No alternating arrangement | No alternating arrangement | No alternating arrangement | One-yarn alternation | One-yarn alternation |
| Weft | Fluororesin fiber A | | | PTFE 440T-60F | PTFE 5320T-240F | PTFE 440T-60F | PTFE 440T-60F | PTFE 440T-60F | PTFE 440T-60F |
| | Fineness | | dtex | 440 | 5320 | 440 | 440 | 440 | 440 |
| | Specific gravity | | g/cm³ | 2.3 | 2.3 | 2.3 | 2.3 | 2.3 | 2.3 |
| | High-strength fiber B | | | – | – | – | Liquid crystal polyester 425T-72F | PPS 220T-50F | Carbon fiber 40T-750F |
| | Fineness | | dtex | – | – | – | 425 | 220 | 40 |
| | Specific gravity | | g/cm³ | – | – | – | 1.4 | 1.3 | 1.8 |
| | Tensile strength | | cN/dtex | – | – | – | 24 | 5 | 20 |
| | Tensile modulus | | cN/dtex | – | – | – | 690 | 40 | 1300 |
| | Elongation | | % | – | – | – | 2.8 | 30 | 1 |
| | Alternating arrangement | | – | – | No alternating arrangement | No alternating arrangement | No alternating arrangement | No alternating arrangement | One-yarn alternation | One-yarn alternation |
| Design of fabric | Weave structure | | – | – | Single-layer plain weave | Single-layer plain weave | Single-layer 1/3 twill weave | Double-layer woven fabric | Single-layer plain weave | Single-layer plain weave |
| | Weave density | Warp | Number of yarns/2.54 cm | | 58 | 16 | 62 | 58+58 | 68 | 98 |
| | | Weft | Number of yarns/2.54 cm | | 58 | 32 | 62 | 58+58 | 68 | 98 |
| | Cover factor (CF) | | – | | 1813 | 1818 | 1938 | 1812 | 1825 | 1817 |
| | Thickness | | mm | | 0.36 | 0.55 | 0.43 | 0.60 | 0.25 | 0.33 |
| | Fineness ratio | a1/b1 | | | – | – | – | 1.0 | 2.0 | 11.0 |
| | | b2/x2 | | | – | – | – | 1.0 | 0.5 | 0.1 |
| | | b2/b1 | | | – | – | – | – | 1 | 1 |
| | | a1/x2 | | | – | – | – | – | 1 | 1 |
| | Area ratio of fluororesin fibers A | Front surface | % | | 50 | 75 | 75 | 99 | 55 | 58 |
| | | Back surface | % | | 50 | 75 | 25 | 1 | 45 | 42 |
| | Ratio between area ratios | | – | | 1.0 | 1.0 | 3.0 | 99.0 | 1.2 | 1.4 |
| Evaluation | Kinetic friction coefficient | | – | | 0.22 | 0.16 | 0.16 | 0.14 | 0.20 | 0.19 |
| | Wear resistance | | – | | △ | × | × | ○ | △ | × |
| | Play | | – | | ○ | × | △ | △ | ○ | △ |

## DESCRIPTION OF REFERENCE SIGNS

1: Fluororesin fiber A1 used as weft
2: Fluororesin fiber A2 used as warp
3: Fiber B1 used as weft
4: Fiber B2 used as warp

## Claims

1. A sliding fabric being a single-layer plain-woven fabric configured to comprise fluororesin fibers A and at least one type of fibers B having a tensile strength, as measured in conformity with JIS L1013: 2010 (Testing methods for man-made filament yarns), of 10 cN/dtex or more,

**characterized in that** the sliding fabric has a ratio, as measured by the method of the description, of 1.5 or more between an area ratio, as measured by the method of the description, of the fluororesin fibers A on one surface thereof and an area ratio of the fluororesin fibers A on another surface.

2. The sliding fabric according to claim 1, wherein fluororesin fibers A1 and fibers B1 below are alternately arranged one by one as one of warp and weft, fibers B2 and fibers C below are alternately arranged one by one as the weft or the warp perpendicular to the fluororesin fibers A1 and the fibers B1, and formulae (i) and (ii) below are satisfied:

the fluororesin fibers A1: the fluororesin fibers A having a total fineness a1;
the fibers B1: the fibers B having a total fineness b1;
the fibers B2: the fibers B having a total fineness b2; and
the fibers C: fluororesin fibers A2 or fibers B3, the fluororesin fibers A2 being the fluororesin fibers A that have a total fineness x2, and the fibers B3 being the fibers B that have a total fineness x2,

$$a1/b1 \geq 1.5 \ (i);$$

and

$$b2/x2 \geq 1.5 \ (ii).$$

3. The sliding fabric according to claim 2, wherein a formula $b2/b1 \geq 1.5$ is satisfied.

4. The sliding fabric according to claim 2 or 3, wherein a formula $a1/x2 \geq 1.5$ is satisfied.

5. The sliding fabric according to any one of claims 2 to 4, wherein the fibers C are the fluororesin fibers A2.

6. The sliding fabric according to any one of claims 1 to 5, wherein the fluororesin fibers A are made from polytetrafluoroethylene resin.

7. The sliding fabric according to any one of claims 1 to 6, wherein the fibers B are fibers having a tensile strength of 20 to 50 cN/dtex.

8. The sliding fabric according to any one of claims 1 to 7, wherein the fibers B are fibers having a tensile modulus, as measured in conformity with JIS L1013: 2010 (Testing methods for man-made filament yarns), of 450 to 800 cN/dtex.

9. The sliding fabric according to any one of claims 1 to 8, wherein the fibers B are organic fibers.

10. The sliding fabric according to any one of claims 1 to 9, wherein the fibers B are liquid crystal polyester fibers.

11. A robot arm cable cover comprising, in at least a part thereof, the sliding fabric according to any one of claims 1 to 10.

12. A bearing member comprising, in at least a part thereof, the sliding fabric according to any one of claims 1 to 10.


**Patentansprüche**

1. Gleitstoff, der ein einschichtiger Leinwandbindungsstoff ist, der ausgelegt ist, um Fluorharzfasern A und zumindest eine Art von Fasern B zu umfassen, die eine Zugfestigkeit, die in Übereinstimmung mit JIS L1013: 2010 (Prüfverfahren für künstliche Filamentgarne) gemessen wurde, von 10 cN/dtex oder mehr aufweisen,
**dadurch gekennzeichnet, dass** der Gleitstoff ein Verhältnis, wie durch das Verfahren der Beschreibung gemessen, zwischen einem Flächenverhältnis, wie durch das Verfahren der Beschreibung gemessen, der Fluorharzfasern A auf einer Oberfläche davon und einem Flächenverhältnis der Fluorharzfasern A auf einer anderen Oberfläche von 1,5 oder mehr aufweist.

2. Gleitstoff nach Anspruch 1, wobei die nachstehenden Fluorharzfasern A1 und die Fasern B1 abwechselnd eine nach der anderen als eines aus Kette oder Schuss angeordnet sind, die nachstehenden Fasern B2 und Fasern C abwechselnd eine nach der anderen als Schuss oder Kette normal auf die Fluorharzfasern A1 und die Fasern B1 angeordnet sind und die nachstehenden Formeln (i) und (ii) erfüllt sind:

die Fluorharzfasern A1: die Fluorharzfasern A weisen eine Gesamtfeinheit a1 auf;
die Fasern B1: die Fasern B weisen eine Gesamtfeinheit b1 auf;
die Fasern B2: die Fasern B wiesen eine Gesamtfeinheit b2 auf; und
die Fasern C: die Fluorharzfasern A2 oder Fasern B3, wobei die Fluorharzfasern A2 die Fluorharzfasern A sind, die eine Gesamtfeinheit x2 aufweisen, und wobei die Fasern B3 die Fasern B sind, die eine Gesamtfeinheit x2 aufweisen;

$$a1/b1 \geq 1,5 \text{ (i)};$$

und

$$b2/x2 \geq 1,5 \text{ (ii)}.$$

3. Gleitstoff nach Anspruch 2, wobei eine Formel $b2/b1 \geq 1,5$ erfüllt ist.

4. Gleitstoff nach Anspruch 2 oder 3, wobei eine Formel $a1/x2 \geq 1,5$ erfüllt ist.

5. Gleitstoff nach einem der Ansprüche 2 bis 4, wobei die Fasern C die Fluorharzfasern A2 sind.

6. Gleitstoff nach einem der Ansprüche 1 bis 5, wobei die Fluorharzfasern A aus Polytetrafluorethylenharz bestehen.

7. Gleitstoff nach einem der Ansprüche 1 bis 6, wobei die Fasern B Fasern sind, die eine Zugfestigkeit von 20 bis 50 cN/dtex aufweisen.

8. Gleitstoff nach einem der Ansprüche 1 bis 7, wobei die Fasern B Fasern sind, die einen Zugfestigkeitsmodul, wie in Übereinstimmung von JIS L1013: 2010 (Prüfverfahren für künstliche Filamentgarne) gemessen, von 450 bis 800 cN/dtex aufweisen.

9. Gleitstoff nach einem der Ansprüche 1 bis 8, wobei die Fasern B organische Fasern sind.

10. Gleitstoff nach einem der Ansprüche 1 bis 9, wobei die Fasern B Flüssigkristallpolyesterfasern sind.

11. Roboterarmkabelabdeckung, umfassend einen Gleitstoff nach einem der Ansprüche 1 bis 10 in zumindest einem Teil davon.

12. Lagerelement, umfassend einen Gleitstoff nach einem der Ansprüche 1 bis 10 in zumindest einem Teil davon.

**Revendications**

1. Tissu glissant qui est un tissu tissé uni monocouche configuré pour comprendre des fibres de résine fluorée A et au moins un type de fibres B présentant une résistance à la traction, telle que mesurée conformément à la norme JIS L1013 : 2010 (procédés de test de fils de filaments artificiels), de 10 cN/dtex ou plus,
**caractérisé en ce que** le tissu glissant présente un rapport, tel que mesuré par le procédé de la description, de 1,5 ou plus entre un rapport de surface, tel que mesuré par le procédé de la description, des fibres de résine fluorée A sur une de ses surfaces et un rapport de surface des fibres de résine fluorée A sur une autre surface.

2. Tissu glissant selon la revendication 1, dans lequel les fibres de résine fluorée A1 et les fibres B1 ci-dessous sont disposées alternativement une par une de chaîne et de trame, les fibres B2 et les fibres C ci-dessous sont disposées alternativement une par une de la trame ou de la chaîne perpendiculairement aux fibres de résine fluorée A1 et aux fibres B1, et les formules (i) et (ii) ci-dessous sont satisfaites :

les fibres de résine fluorée A1:les fibres de résine fluorée A présentant une finesse totale a1 ;
les fibres B1:les fibres B présentant une finesse totale b1 ;
les fibres B2:les fibres B présentant une finesse totale b2 ; et
les fibres C:les fibres de résine fluorée A2 ou les fibres B3, les fibres de résine fluorée A2 étant les fibres de résine fluorée A qui présentent une finesse totale x2, et les fibres B3 étant les fibres B qui présentent une finesse totale x2,

$$a1/b1 \geq 1,5 \ (i) \ ;$$

et

$$b2/x2 \geq 1,5 \ (ii).$$

3. Tissu glissant selon la revendication 2, dans lequel une formule $b2/b1 \geq 1,5$ est satisfaite.

4. Tissu glissant selon la revendication 2 ou 3, dans lequel une formule $a1/x2 \geq 1,5$ est satisfaite.

5. Tissu glissant selon l'une quelconque des revendications 2 à 4, dans lequel les fibres C sont les fibres de résine fluorée A2.

6. Tissu glissant selon l'une quelconque des revendications 1 à 5, dans lequel les fibres de résine fluorée A sont fabriquées à partir d'une résine de polytétrafluoroéthylène.

7. Tissu glissant selon l'une quelconque des revendications 1 à 6, dans lequel les fibres B sont des fibres présentant une résistance à la traction comprise entre 20 et 50 cN/dtex.

8. Tissu glissant selon l'une quelconque des revendications 1 à 7, dans lequel les fibres B sont des fibres présentant un module de traction, tel que mesuré conformément à la norme JIS L1013 : 2010 (procédés de test de fils de filaments artificiels), de 450 à 800 cN/dtex.

9. Tissu glissant selon l'une quelconque des revendications 1 à 8, dans lequel les fibres B sont des fibres organiques.

10. Tissu glissant selon l'une quelconque des revendications 1 à 9, dans lequel les fibres B sont des fibres de polyester à cristaux liquides.

11. Protection de câble de bras robotique comprenant, dans au moins une partie de celle-ci, le tissu glissant selon l'une quelconque des revendications 1 à 10.

12. Élément de support comprenant, dans au moins une partie de celui-ci, le tissu glissant selon l'une quelconque des revendications 1 à 10.

Fig. 1

Front surface

Back surface

Fig. 2

Front surface

1
2
3
4

Back surface

1
2
3
4

Fig. 3

Front surface

Back surface

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6398189 B
- JP 2005220486 A
- WO 2018074207 A
- CN 103572454 A